# EUROPEAN PATENT APPLICATION

(11) **EP 4 242 956 A1**
(43) Date of publication of application: **13.09.2023**
(21) Application number: 23160326.7
(22) Date of filing: 07.03.2023
(51) Int. Cl.: G06Q 30/06

(54) **APPARATUS AND METHOD FOR RECOMMENDING OPTIMAL MARKET**

(30) Priority: 08.03.2022 KR 20220029239
(71) Applicant: Laon People Inc., Seongnam-si, Gyeonggi-do 13511 (KR)
(72) Inventor: Kim, Yeonjung, 16847 Yongin-si, Gyeonggi-do (KR)
(74) Representative: Gulde & Partner

(57) **Abstract**

Proposed herein are an apparatus and method for recommending an optimal market. The method for recommending an optimal market includes: collecting and storing transaction information for each type of agricultural/marine products in a plurality of markets in which agricultural/marine products are traded; receiving the production information of the agricultural/marine products of a user, including the type, quantity, and production area location information of the agricultural/marine products, from the user; searching for transaction information corresponding to the production information of the agricultural/marine products of the user, and selecting one or more markets to be recommended to the user based on the found transaction information; and recommending the selected markets to the user by providing information about the selected markets to the user.

## Description

### CROSS-REFERENCE TO RELATED APPLICATION

This application claims the benefit of Korean Patent Application No. 10-2022-0029239 filed on March 3, 2022, which is hereby incorporated by reference herein in its entirety.

### BACKGROUND

### 1. Technical Field

The embodiments disclosed herein relate to an apparatus and method for recommending an optimal market that recommend an optimal market for selling agricultural/marine products so that agricultural/marine products can be directly delivered from a production area to the recommended market.

### 2. Description of the Related Art

Since the maintenance of freshness is important for agricultural/marine products, there is a limitation in that producers directly deal with all distribution processes such as the sale, transportation, and storage of agricultural/marine products. Accordingly, there is a problem in that it is difficult to perform so-called direct trade in which producers directly sell agricultural/marine products to consumers. Accordingly, it is common for producers to trade agricultural/marine products with wholesalers in wholesale markets. Generally, in wholesale markets, the prices of agricultural/marine products are determined through auctions. Accordingly, agricultural/marine products can be sold to a wholesaler at an auction price determined through an auction process, and a seller, who is a vendor, can receive an amount corresponding to the auction price as a sales price. Therefore, the price of the same type of agricultural/marine products may be determined differently according to the supply and demand of each market.

Furthermore, the supply of agricultural/marine products to a market and the demand for them change every day. Accordingly, the transaction price of the agricultural/marine products determined in the market is also constantly changing.

Meanwhile, the profit of a producer attributable to the sale of agricultural/marine products may be changed not only by the transaction price but also by the cost incurred in the process of transporting the agricultural/marine products to a market and storing them.

Accordingly, from the standpoint of producers of agricultural/marine products, it is advantageous to supply agricultural/marine products to a market having a high transaction price, but it is desirable to minimize the cost incurred in the process of supplying agricultural/marine products to a market.

However, in the past, it is difficult for producers of agricultural and marine products to select a market having a high transaction price at each supply point of agricultural/marine products while monitoring the differences between the transaction prices of markets and to make decisions by taking into consideration the cost incurred in the process in an integrated manner.

Korean Patent Application Publication No. 10-2021-0157680 entitled "Marine Product Joint Purchase System and Method for Recommending Marine Product Estimates" discloses a method in which consumers select a purchase market and a retail store, select purchase target products and purchase options, form a j oint purchase team, and then purchase marine products.

However, this technology is intended only to support the purchase of marine products at a low price from the standpoint of consumers, and does not enable producers of marine products to supply products to an optimal market. Accordingly, even with this conventional method, there is a problem in that it is difficult to support decision making that allows producers to select an optimal market.

Therefore, there is a demand for technology for overcoming the above-described problems.

Meanwhile, the above-described background technology corresponds to technical information that has been possessed by the present inventor in order to contrive the present invention or that has been acquired in the process of contriving the present invention, and can not necessarily be regarded as well-known technology that had been known to the public prior to the filing of the present invention.

### SUMMARY

An object of the embodiments disclosed herein is to propose an apparatus and method for recommending an optimal market that recommend an optimal market for the supply of agricultural/marine products to a producer.

An object of the embodiments disclosed herein is to propose an apparatus and method for recommending an optimal market that recommend a market capable of selling agricultural/marine products, produced by a producer, at a desired price to the producer.

An object of the embodiments disclosed herein is to propose an apparatus and method for recommending an optimal market that support a producer in making a decision in order to maximize his or her profit by taking into consideration the transaction price of agricultural/marine products in each market and the cost incurred to transport the agricultural/marine products to the corresponding market in an integrated manner.

As a technical solution for accomplishing the above objects, according to an embodiment, there is provided a method for recommending an optimal market, the method being performed by an apparatus for recommending an optimal market, the method including: collecting and storing transaction information for each type of agricultural/marine products in a plurality of markets in which agricultural/marine products are traded; receiving the production information of the agricultural/marine products of a user, including the type, quantity, and production area location information of the agricultural/marine products, from the user; searching for transaction information corresponding to the production information of the agricultural/marine products of the user, and selecting one or more markets to be recommended to the user based on the found transaction information; and recommending the selected markets to the user by providing information about the selected markets to the user.

According to another embodiment, there is provided an apparatus for recommending an optimal market, the apparatus including: storage configured to store transaction information for each type of agricultural/marine products in a plurality of markets in which agricultural/marine products are traded; an input/output interface configured to receive the production information of the agricultural/marine products of a user, including the type, quantity, and production area location information of the agricultural/marine products, from a user, and to recommend one or more markets to the user by providing information about the markets to be recommended to the user, and a controller configured to periodically collect the transaction information, to search for transaction information corresponding to the production information of the agricultural/marine products of the user, and to select one or more markets to be recommended to the user based on the found transaction information.

According to still another embodiment, there is provided a non-transitory computer-readable storage medium having stored thereon a program that, when executed by a processor, causes the processor to execute a method for recommending an optimal market, wherein the method includes: collecting and storing transaction information for each type of agricultural/marine products in a plurality of markets in which agricultural/marine products are traded; receiving the production information of the agricultural/marine products of a user, including the type, quantity, and production area location information of the agricultural/marine products, from the user; searching for transaction information corresponding to the production information of the agricultural/marine products of the user, and selecting one or more markets to be recommended to the user based on the found transaction information; and recommending the selected markets to the user by providing information about the selected markets to the user.

According to still another embodiment, there is provided a computer program that is executed by an apparatus for recommending an optimal market and stored in a non-transitory computer-readable storage medium in order to perform a method for recommending an optimal market, wherein the method includes: collecting and storing transaction information for each type of agricultural/marine products in a plurality of markets in which agricultural/marine products are traded; receiving the production information of the agricultural/marine products of a user, including the type, quantity, and production area location information of the agricultural/marine products, from the user; searching for transaction information corresponding to the production information of the agricultural/marine products of the user, and selecting one or more markets to be recommended to the user based on the found transaction information; and recommending the selected markets to the user by providing information about the selected markets to the user.

### BRIEF DESCRIPTION OF THE DRAWINGS

The above and other obj ects, features, and advantages of the present invention will be more clearly understood from the following detailed description taken in conjunction with the accompanying drawings, in which:
FIG. 1 is a diagram showing a network configuration including an apparatus for recommending an optimal market according to an embodiment;
FIG. 2 is a block diagram illustrating the functional configuration of an apparatus for recommending an optimal market according to an embodiment;
FIG. 3 is a diagram showing a method for recommending an optimal market according to an embodiment in a stepwise manner; and
FIG. 4 is an exemplary diagram illustrating a screen provided to a user by the method for recommending an optimal market according to the embodiment.

### DETAILED DESCRIPTION

Various embodiments will be described in detail below with reference to the accompanying drawings. The following embodiments may be modified to various different forms and then practiced. In order to more clearly illustrate features of the embodiments, detailed descriptions of items that are well known to those having ordinary skill in the art to which the following embodiments pertain will be omitted. Furthermore, in the accompanying drawings, portions unrelated to descriptions of the embodiments will be omitted. Throughout the specification, like reference symbols will be assigned to like portions.

Throughout the specification, when one component is described as being "connected" to another component, this includes not only a case where the one component is "directly connected" to the other component but also a case where the one component is "connected to the other component with a third component arranged therebetween." Furthermore, when one portion is described as "including" one component, this does not mean that the portion does not exclude another component but means that the portion may further include another component, unless explicitly described to the contrary.

Embodiments will be described in detail below with reference to the accompanying drawings.

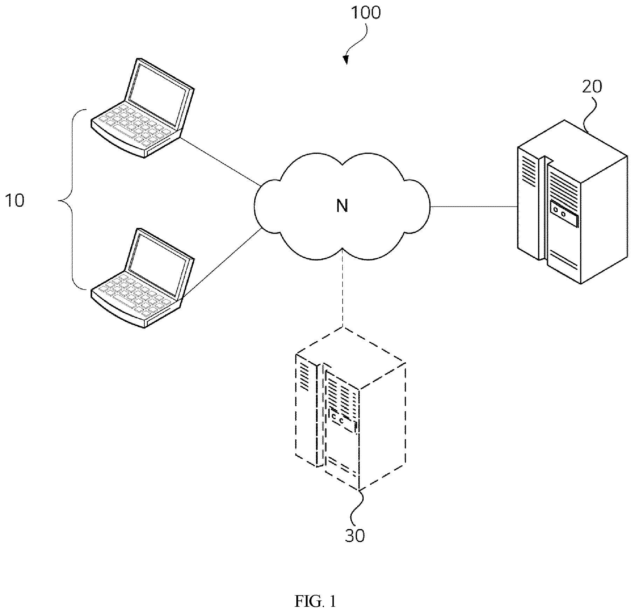

FIG. 1 is a diagram showing a network configuration including an apparatus for recommending an optimal market according to an embodiment.

As shown in FIG. 1, the apparatus 100 for recommending an optimal market is an apparatus implemented as a server-client system including a plurality of user terminals 10 and a service server 20. The service server 20 collects information about the transactions of agricultural/marine products that occur in agricultural and marine markets, and selects markets for the sale of agricultural/marine products to the users of the user terminals 10 based on the collected information, thereby providing a service that recommends markets to users.

In this case, each of the users is a person who intends to transport agricultural/marine products to a market and sell them to others at the market, such as a producer who produces agricultural/marine products, a transporter who receives agricultural/marine products from a producer and delivers them to a market, a buyer who purchases agricultural/marine products locally from a producer, or the like. The user may be a decision maker who determines a market for the sale of agricultural/marine products.

In this case, each of the user terminals 10 may be implemented as a computer, a mobile terminal, a television, a wearable device, or the like that can access a remote server or connect with another terminal and a server over a network N. In this case, the computer includes, e.g., a notebook, a desktop, a laptop, and the like each equipped with a web browser. The mobile terminal is, e.g., a wireless communication device capable of guaranteeing portability and mobility, and may include all types of handheld wireless communication devices, such as a Personal Communication System (PCS) terminal, a Personal Digital Cellular (PDC) terminal, a Personal Handyphone System (PHS) terminal, a Personal Digital Assistant (PDA), a Global System for Mobile communications (GSM) terminal, an International Mobile Telecommunication (IMT)-2000 terminal, a Code Division Multiple Access (CDMA)-2000 terminal, a W-Code Division Multiple Access (W-CDMA) terminal, a Wireless Broadband (Wibro) Internet terminal, a smartphone, a Mobile Worldwide Interoperability for Microwave Access (mobile WiMAX) terminal, and the like. Furthermore, the television may include an Internet Protocol Television (IPTV), an Internet Television (Internet TV), a terrestrial TV, a cable TV, and the like. Moreover, the wearable device is an information processing device of a type that can be directly worn on a human body, such as a watch, glasses, an accessory, clothing, shoes, or the like, and can access a remote server or connect with another terminal directly or via another information processing device over a network.

Furthermore, in this case, the service server 20 may be implemented as a computer capable of communicating over a network with an electronic terminal on which an application or web browser for interaction with a user is installed, or may be implemented as a cloud computing server. Furthermore, the server may include a storage device capable of storing data, or may store data via a third server.

The above-described user terminals 10 and service server 20 cooperate with each other to constitute the apparatus 100 for recommending an optimal market that is implemented as one server-client system. The apparatus 100 for recommending an optimal market enables users to receive a market recommendation service provided by the service server 20 while interfacing with the users through the user terminals 10.

Meanwhile, the third-party server 30 shown in FIG. 1 is a third-party apparatus that holds information about transactions occurring in each market. The service server 20 may request and receive transaction information from the third-party server 30, or may crawl and collect transaction information posted by the third-party server 30 in the form of web pages.

More specifically, for example, the third-party server 30 may be an apparatus operated by a related organization of the Korean Ministry of Agriculture, Food and Rural Affairs, the Korea Agro-Fisheries & Food Trade Corporation, or the like, and may provide transaction information such as auction price information for each item of each wholesale market corporation or fixed or free price transaction result information. In particular, markets from which the third-party server 30 collects transaction information may include wholesale markets in which electronic auctions are performed.

In this case, the transaction information may include the identification information of each market in which trade was performed, information about the type of agricultural/marine products traded, transaction price information, transaction time information, and the like. In this case, the type of agricultural/marine products includes at least information about an item, and may further include information about a variety. For example, the information about the type of agricultural/marine products may include information about an item such as 'grapes,' or may further include information subdivided as a variety such as 'Shine Muscat.' Furthermore, the transaction information may optionally include information about a quality grade assigned to traded agricultural/marine products.

For example, each unit piece of transaction information may include a data set including information on auction time, a transaction item, a transaction specification, an auction price, a transaction volume, a wholesale market name, a wholesale corporation name, and a producer or production location. Each unit piece of transaction information may additionally include information about a grade.

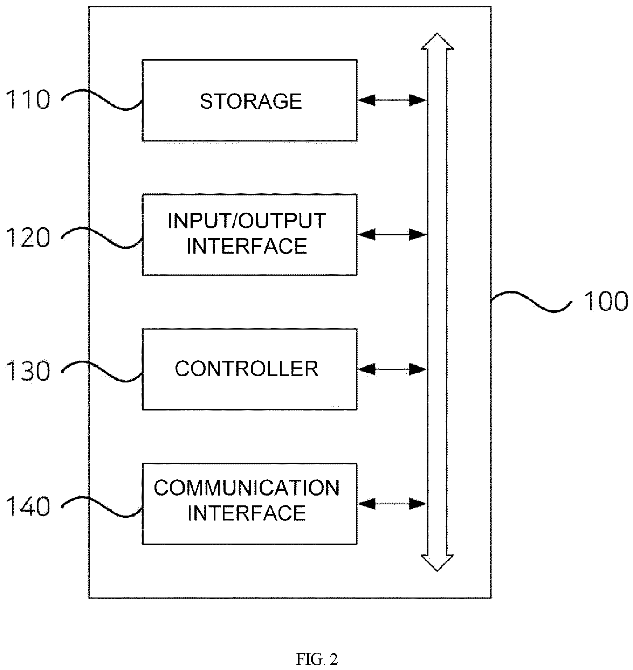

As regards the configuration of the apparatus 100 for recommending an optimal market in more detail, as shown in FIG. 2, it may include storage 110, an input/output interface 120, a controller 130, and a communication interface 140. FIG. 2 is a block diagram showing the functional configuration of an apparatus 100 for recommending an optimal market according to an embodiment.

First, various types of data such as files or programs may be installed and stored in the storage 110. The controller 130, which will be described later, may access and use data stored in the storage 110, or may store new data in the storage 110. Furthermore, the controller 130 may execute a program installed in the storage 110. More specifically, information about each of a plurality of markets in which agricultural/marine products are traded may be stored in the storage 110. More specifically, information about the name, identification information, and location of each market, the type of agricultural/marine products traded in the market, and/or the like may be stored as the information about each market. In this case, each market for which information is stored is a market from which the above-described transaction information is collected. In addition, the transaction information for each market collected by the third-party server 30 may be stored in the storage 110.

Furthermore, an algorithm used to select an appropriate market may be stored in the storage 110 in order to recommend a market for the sale of a user's agricultural/marine products to the user.

In this case, the algorithm is an algorithm that selects and outputs one or more optimal markets as an output when receiving production information such as the type of agricultural/marine products, the location of the production area of the agricultural/marine products, and the grade or quantity of the agricultural/marine products as an input. The algorithm may include a specific function, or a machine learning model such as an artificial neural network.

In addition, the storage 110 may store the account information of each user. The storage 110 may store the address or location information of each user, the type of agricultural/marine products produced by the user, and the transaction history of the user's past transactions of agricultural/marine products in the market in association with the identifier of the user.

Meanwhile, the input/output interface 120 may include an input/output means for receiving the production information of the agricultural/marine products of a user, including information about the type, quantity, and location of the production area of the agricultural/marine products, from the user, and providing information about one or more markets to be recommended to the user, thereby recommending the market to the user. More specifically, the input/output interface 120 may include an input interface configured to receive input from a user and an output interface configured to display information such as the result of the performance of a task or the state of the apparatus 100 for recommending an optimal market. For example, the input/output interface 120 may include an operation panel configured to receive user input and a display panel configured to display screens.

More specifically, the input interface may include devices capable of receiving various types of user input such as a keyboard, physical buttons, a touch screen, a camera, and a microphone. Furthermore, the output interface may include a display panel, and/or a speaker. However, the input/output interface 120 is not limited thereto, and may include components capable of supporting various types of input/output.

The input/output interface 120 may receive information about the type, grade, quantity and/or the like of agricultural/marine products to be traded in a market from a user as production information, and may acquire a part of the production information, e.g., information about the address or location of a production area, by reading it from the account information of the user.

Furthermore, the input/output interface 120 outputs information about one or more recommended markets selected by the controller 130 to be described later and displays the information to a user, thereby helping the user to determine a market for the sale of agricultural/marine products.

Furthermore, the input/output interface 120 may output information about a transportation cost or a transaction profit to be generated when agricultural/marine products are sold in a specific market that is predicted in the process in which the controller 130 selects the market to be recommended.

Meanwhile, the controller 130 may control the overall operation of the apparatus 100 for recommending an optimal market, and may include a processor such as a central processing unit (CPU). The controller 130 may execute a program stored in the storage 110, or may compute data using an algorithm or an artificial intelligence model stored in the storage 110. Furthermore, the controller 130 may store processed data back in the storage 110.

First, the controller 130 may successively collect transaction information for each market held by the third-party server 30 and store it in the storage 110. In particular, transaction information generated in the same market may be accumulated and averaged for each period, or the trend of transaction information for a specific period may be analyzed. For example, average price information for each market may be calculated by averaging transaction price information for a specific type of agricultural/marine products in a recent week in a plurality of markets for each market.

In addition, the controller 130 may search for transaction information corresponding to the production information of the agricultural/marine products of a user, and may select one or more markets to be recommended to the user based on the found transaction information.

To this end, the controller 130 may check the production information collected by the input/output interface 120 from a user, and may search for transaction information corresponding to production information. In detail, the controller 130 may search for the transaction information of agricultural/marine products corresponding to information about the type of agricultural/ marine products of a user. In addition, the controller 130 may determine markets each having a transaction history for agricultural/marine products having the same type as the agricultural/marine products of the user by checking the market identification information included in the found transaction information.

Meanwhile, the controller 130 may select markets having a relatively short transportation distance or transportation time for a user based on the location of the user, identified based on one of the address and location information of the production area of the agricultural/marine products of the user and the current location of the user terminal 10, and the location information of each market. Alternatively, the controller 130 may select markets having a relatively low expected transportation cost for each market, e.g., the sum of a fuel cost, a toll fee, and a labor cost predicted according to the quantity, weight, and transportation route of agricultural/marine products. In this case, when calculating the transportation cost, the controller 130 may calculate the transportation cost by taking into consideration the transportation time required to reach each market and the waiting time taken up to the transaction time such as the auction time after reaching the market and thus additionally taking into consideration the cost additionally incurred over time, e.g., a cold chain maintenance cost and/or an additional labor cost. In addition, during the transportation time required to reach each market and the waiting time taken up to the auction time, the freshness of the products may be deteriorated. By taking into consideration a decline in the product value caused by this, the controller 130 may estimate a final transportation cost by adding a cost, corresponding to the decline in the product value attributable to the lapse of the transportation time and/or waiting time, to the transportation cost.

Accordingly, the controller 130 may select markets, for which transportation information, including at least one of a transportation distance, transportation time and a transportation cost, satisfies preset conditions or which correspond to a predetermined range of rankings in descending order, and which also have the transaction information of agricultural/marine products having the same type as the agricultural/marine products of a user within a predetermined period, as recommendation targets for the user.

Furthermore, the controller 130 may check the transaction information of agricultural/marine products having the same type as the agricultural/marine products of a user, and may select markets having relatively desired price information included in the transaction information as recommendation targets. For example, when for the item "grapes," market A and market B are at similar distances from a user and the transaction information of 10,000 won for 1 kg of grapes was recently recorded in market A and the transaction information of 12,000 won for 1 kg of grapes was recorded in market B, the controller 130 may select market B as a recommended market.

In other words, the controller 130 may search for the transaction information of agricultural/marine products corresponding to information about the type of agricultural/marine products of a user, may calculate transportation information including at least one of a transportation time, a transportation distance and a transportation cost for each of the identified markets based on one or more markets identified by the market identification information included in the found transaction information and the location information of the production area included in the production information, and may select one or more markets to be recommended to the user based on both price information and transportation information included in the found transaction information. When selecting a market by referring to the price information, the controller 130 may additionally refer to the trend of changes in market price according to the trading time for each market. The controller130 may determine the trend of changes in market prices in each market by using the recent transaction information of the market, and may predict the price information of the agricultural/marine products corresponding to the auction time when the agricultural/marine products of a user reach the market and participate in the auction. For example, when the pieces of average price information of agricultural/marine products according to recent transaction information in two adjacent markets are similar to each other but there is a market in which a market price in the time period in which a user is expected to participate in the auction of agricultural/marine products, e.g., the afternoon market session, is expected to be relatively high, the corresponding market may be selected as a recommended market.

In this case, the controller 130 may refer to only transaction information within a predetermined recent period. In addition, since the price information is determined based on the unit quantity, weight, volume, or the like of agricultural/marine products, the controller 130 may calculate and compare same unit-based prices by converting different units-based price information in individual markets.

Through this, the controller 130 may select, as a recommended market, a market in which the transaction price of agricultural/marine products is relatively high from among markets for which the transportation of the agricultural/marine products from a production area to a market is easy or the transportation cost of the agricultural/marine products is low.

According to an embodiment, the controller 130 may select at least some of the identified markets as candidates based on the calculated transportation information, and then, may finally select one or more markets to be recommended to a user from among the markets selected as the candidates in descending order of price information based on the price information included in found transaction information. The controller 130 may primarily select markets within a predetermined distance from a production area as candidates, and then, may determine recommendation rankings in descending order of the transaction price when checking the transaction information of agricultural/marine products having the same type as the agricultural/marine products of a user and recommend markets to the user based on the rankings.

Furthermore, according to an embodiment, the controller 130 may first select some markets as candidates in ascending order of the cost of transportation from a production area, and then, may finally select one or more markets to be recommended to the user by taking into consideration the price information included in found transaction information.

In addition, the controller 130 may predict a transportation cost for each market as described above. In addition, the controller 130 may calculate expected sales when the agricultural/marine products of a user are sold in each market by referring to the price information of the agricultural/marine products of the user in each market and the quantity or weight of the agricultural/marine products of the user. Accordingly, the controller 130 may calculate an expected transaction profit for each market based on the predicted transportation cost and the expected sales. Accordingly, the controller 130 may select a market to be recommended to the user based on the predicted information.

For example, the controller 130 may recommend one or more markets in descending order of the expected transaction profit. However, in this case, only some of the markets within a predetermined distance may be recommended in descending order of the expected transaction profit by referring to the transportation distance to the market in addition to the expected transaction profit.

As described above, the controller 130 may select one or more markets to be recommended to a user based on transportation information and the transaction price information of the agricultural/marine products of the user in each market.

Furthermore, the controller 130 may recommend one or more markets to a user by providing information about the selected markets, e.g., information about the locations or names of the selected markets, to the user through the input/output interface 120. Furthermore, when one of the recommended markets is selected by the user, specific information about the selected market may be additionally provided. For example, information about the recent average transaction price of agricultural/marine products having the same type as the agricultural/marine products of a user based on transaction information collected in a corresponding market may be provided to the user through the input/output interface 120.

Furthermore, the controller 130 may additionally provide the user with expected information calculated for the selected market, e.g., information about an expected transportation cost, an expected transportation time, an expected transportation distance and/or the like, information about an expected transaction profit, and/or the like.

According to an embodiment, the controller 130 may display a recommended transportation route for a selected market on a map, and may provide detailed information about at least the departure time while providing a user with information about the time when the agricultural/marine products of the user are traded in the selected market, e.g., the auction time.

Meanwhile, the communication interface 140 may perform wired/wireless communication with another device or a network. To this end, the communication interface 140 may include a communication module configured to support at least one of various wired/wireless communication methods. For example, the communication module may be implemented in the form of a chipset.

The wireless communication supported by the communication interface 140 may be, e.g., Wireless Fidelity (Wi-Fi), Wi-Fi Direct, Bluetooth, Ultra-Wide Band (UWB), or Near Field Communication (NFC). Furthermore, the wired communication supported by the communication interface 140 may be, e.g., Universal Serial Bus (USB), or High Definition Multimedia Interface (HDMI).

The communication interface 140 may allow the apparatus 100 for recommending an optimal market, implemented as a server-client system, to communicate with another apparatus, e.g., the third-party server 30.

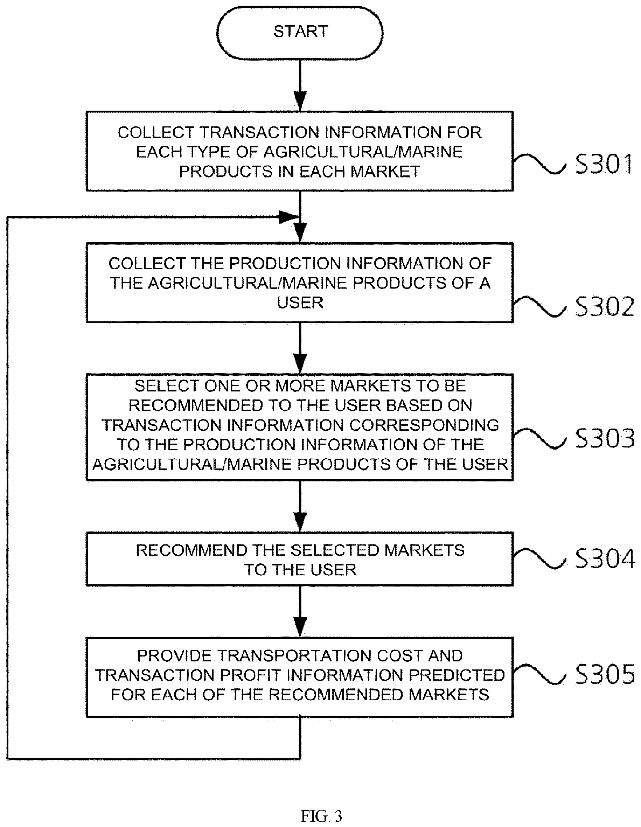

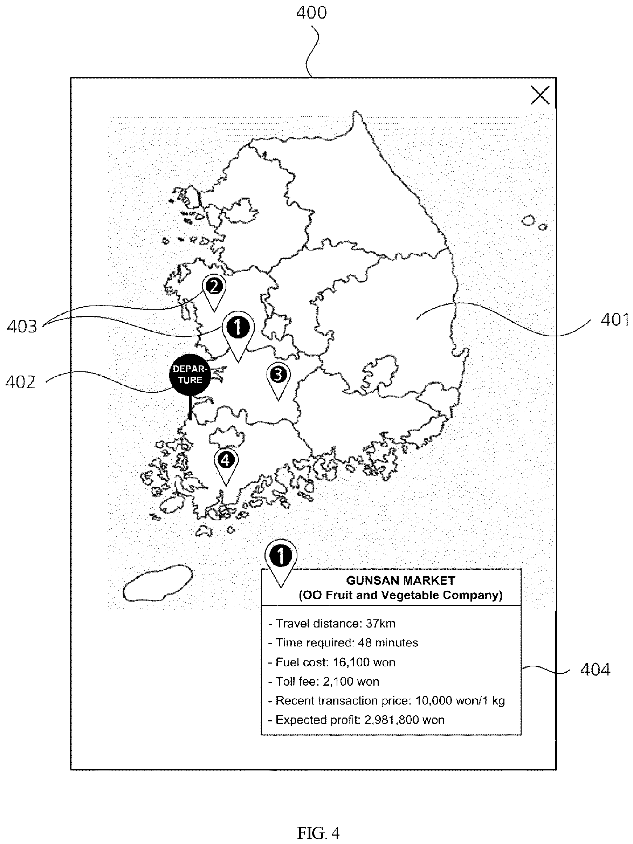

Meanwhile, a method for recommending an optimal market performed by the above-described apparatus 100 for recommending an optimal market will be described with reference to FIGS. 3 and 4 in a stepwise manner. FIG. 3 is a diagram showing a method for recommending an optimal market according to an embodiment in a stepwise manner, and FIG. 4 is an exemplary diagram illustrating a screen provided to a user by the method for recommending an optimal market according to the embodiment shown in FIG. 3.

The method for recommending an optimal market according to the embodiment, which is shown in FIGS. 3 and 4, includes steps that are processed in a time-series manner by the apparatus 100 for recommending an optimal market, which is shown in FIGS. 1 and 2. Accordingly, the descriptions that are omitted below but have been given above in conjunction with the apparatus 100 for recommending an optimal market, which is shown in FIGS. 1 and 2, may also be applied to the method for recommending an optimal market according to the embodiment, which is shown in FIGS. 3 and 4.

First, as shown in FIG. 3, the apparatus 100 for recommending an optimal market may periodically and successively collect transaction information for each type of agricultural/marine products in each market in step S301. The apparatus 100 for recommending an optimal market may collect transaction information for each type of agricultural/marine products in a plurality of markets in which agricultural/marine products are traded, and may accumulate and store transaction information according to the type of agricultural/marine products for each market.

To this end, the apparatus 100 for recommending an optimal market may collect transaction information by crawling transaction information posted by the third-party server 30 in the form of web pages or by requesting and receiving transaction information from the third-party server 30.

Accordingly, the apparatus 100 for recommending an optimal market may specifically record the times, the markets and the quantities at, in and at which agricultural/marine products were traded according to unit quantity, weight, grade, and the like for agricultural/marine products of a specific item or variety. For example, as for a button mushroom (general) variety, there may be collected and recorded transaction information in which OO Fruit and Vegetable Company, which is a wholesale corporation, won a bid for 2 kg of button mushrooms, produced in Nonsan-city, Chungcheongnam-do, at the winning bid of 12,500 won at 5:00 am today at the Garak Agricultural/Marine Products Wholesale Market in Seoul.

As described above, the apparatus 100 for recommending an optimal market may receive the production information of agricultural/marine products from the user while successively collecting transaction information in step S302. More specifically, when a market recommendation is requested from the user, the apparatus 100 for recommending an optimal market may provide a user interface through which production information may be input to the user. In this case, the production information may include information about the type, quantity, and location of the production area of the agricultural/marine products of the user, in which case the information about the quantity may include information about the quantity of agricultural/marine products for each grade according to an embodiment. For example, the numbers of boxes on a per-box basis such as 23 boxes for a 'special' grade, 4 boxes for a 'high' grade, and 3 boxes for a 'medium' grade may be received for respective grades.

In this case, data corresponding to relevant items out of data included in account information pre-registered in the user's account may be automatically entered in some input fields of the user interface for inputting production information.

For example, when the type of agricultural/marine products produced by the user is only 'sweet potato' and 'sweet potato' is pre-registered as the type of agricultural/marine products produced by the user in the user's account information, the apparatus 100 for recommending an optimal market may automatically enter 'sweet potato' in an input field predetermined to enter the type of agricultural/marine products in the user interface for inputting production information and then provide the information to the user. In the same way, information about the address or location of the production area of the user may also be automatically entered.

In addition, once overall production information has been input, the apparatus 100 for recommending an optimal market may at least temporarily store the input production information.

Thereafter, the apparatus 100 for recommending an optimal market may select one or more markets to be recommended to the user by referring to transaction information corresponding to the input production information in step S303.

In this case, the apparatus 100 for recommending an optimal market may take into consideration transportation information including at least one of a transportation distance, a transportation time and a transportation cost based on the location of a production area and the location of each market as one factor for the selection of the market. In other words, the apparatus 100 for recommending an optimal market may select a market having a short distance, a short transportation time, or a low transportation cost as a recommended market.

In addition, the apparatus 100 for recommending an optimal market may take into consideration whether a market in question is a market having the recent transaction information of agricultural/marine products having the same type as the agricultural/marine products of a user as a factor for the selection of a market. Furthermore, the apparatus 100 for recommending an optimal market may take into consideration transaction price information included in the recent transaction information as a factor for the selection of a market for each market having the recent transaction information of agricultural/marine products having the same type as the agricultural/marine products of the user.

In this case, the apparatus 100 for recommending an optimal market may refer to only transaction information within a recent period, such as transaction information within a recent month or transaction information within a recent week, for the purpose of selecting a recommended market. Furthermore, according to an embodiment, the apparatus 100 for recommending an optimal market may select a recommended market based on average price information obtained by averaging the transaction price information of transaction information collected within a recent predetermined period for the same type of agricultural/marine products.

More specifically, the apparatus 100 for recommending an optimal market may preferentially select, as a recommendation target, a market for which the transportation of agricultural/marine products to the market is easy due to a short transportation distance, a short transportation time, and a low transportation cost when transportation information is referred to and a market for which transaction price information on a per-unit basis is high when transaction information collected for each market is referred to.

For example, some markets may be selected as candidates by preferentially referring to transportation information, and then, one or more recommended markets may be finally determined by referring to price information. Alternatively, conversely, some markets are selected in descending order of price as candidates when price information is referred to, and then, one or more markets for which transportation is relatively easy may be selected as recommended markets when transportation information is referred to. As another embodiment, the apparatus 100 for recommending an optimal market may predict a transportation cost for each market, predict sales according to a transaction price, and finally predict an expected transaction profit for each market, so that recommended targets can be selected in descending order of the expected transaction profit.

Furthermore, the apparatus 100 for recommending an optimal market may select one or more recommended markets by optionally additionally taking into consideration the preference of a user.

In addition, as another embodiment, the apparatus 100 for recommending an optimal market may optionally additionally receive a transportation start time as production information, and may exclude some markets from recommended markets by taking into consideration the auction start time and transportation start time of each market for agricultural/marine products having the same type as the agricultural/marine products of a user. Alternatively, the apparatus 100 for recommending an optimal market may suggest the transportation start time, i.e., departure time, of agricultural/marine products by referring to the auction start time of a recommended market.

In addition, thereafter, the apparatus 100 for recommending an optimal market may recommend one or more markets for the sale of agricultural/marine products to the user by providing information about the markets, selected in step S303, to the user in step S304.

For example, the apparatus 100 for recommending an optimal market may provide the screen 400, shown in FIG. 4, to the user. As shown in FIG. 4, the apparatus 100 for recommending an optimal market may display a departure point icon 402 at the location of a production area on a map-type user interface 401, and may display market icons 403 at the respective locations of recommended markets based on this. Furthermore, recommendation rankings may be marked on the market icons 403.

However, in each of the market icons 403, the recent transaction price information of agricultural/marine products having the same type as the agricultural/marine products of the user in each market may be exposed instead of a recommendation ranking.

Accordingly, the user may check information about the one or more markets recommended by the apparatus 100 for recommending an optimal market.

Thereafter, the apparatus 100 for recommending an optimal market may provide the user with predicted information predicted for at least one of the recommended markets at step S305. In this case, the prediction information may be, e.g., information about a transportation cost, sales, a transaction profit, and/or the like.

In addition, in this case, the apparatus 100 for recommending an optimal market may provide various types of detailed information for each market as well as predicted information to the user.

More specifically, as shown in FIG. 4, the apparatus 100 for recommending an optimal market may display the detailed information 404 of at least one of the recommended markets, e.g., a market having a top ranking, on one side of the screen 400, or may display and provide the detailed information 404 of a market corresponding to one of the market icons 403, selected by a user, on one side of the screen 400.

As shown in FIG. 4, the detailed information 404 may include predicted information such as a travel distance, a required time, a fuel cost, a toll fee, and/or the like to a corresponding market, and may further include the recent transaction price information of agricultural/marine products based on transaction information collected for the corresponding market. Furthermore, the apparatus 100 for recommending an optimal market may calculate an expected transaction profit and include it in the detailed information 404.

Furthermore, the apparatus 100 for recommending an optimal market may guide a user through a transportation route to a specific recommended market when the user selects the specific recommended market and starts transportation.

Therefore, the user may transport his/her agricultural/marine products to the market recommended by the apparatus 100 for recommending an optimal market and sell them in the market, thereby increasing a sales profit as well as the convenience of transportation.

The term "unit" used in the above-described embodiments means software or a hardware component such as a field-programmable gate array (FPGA) or application-specific integrated circuit (ASIC), and a "unit" performs a specific role. However, a "unit" is not limited to software or hardware. A "unit" may be configured to be present in an addressable storage medium, and also may be configured to run one or more processors. Accordingly, as an example, a "unit" includes components, such as software components, object-oriented software components, class components and task components, processes, functions, attributes, procedures, subroutines, segments in program code, drivers, firmware, microcode, circuits, data, a database, data structures, tables, arrays, and variables.

Components and a function provided in "unit(s)" may be coupled to a smaller number of components and "unit(s)" or divided into a larger number of components and "unit(s)."

In addition, components and "unit(s)" may be implemented to run one or more central processing units (CPUs) in a device or secure multimedia card.

The method for recommending an optimal market according to the embodiment described with reference to FIGS. 3 and 4 may be implemented in the form of a computer-readable medium that stores instructions and data that can be executed by a computer. In this case, the instructions and the data may be stored in the form of program code, and may generate a predetermined program module and perform a predetermined operation when executed by a processor. Furthermore, the computer-readable medium may be any type of available medium that can be accessed by a computer, and may include volatile, non-volatile, separable and non-separable media. Furthermore, the computer-readable medium may be a computer storage medium. The computer storage medium may include all volatile, non-volatile, separable and non-separable media that store information, such as computer-readable instructions, a data structure, a program module, or other data, and that are implemented using any method or technology. For example, the computer storage medium may be a magnetic storage medium such as an HDD, an SSD, or the like, an optical storage medium such as a CD, a DVD, a Blu-ray disk or the like, or memory included in a server that can be accessed over a network.

Furthermore, the method for recommending an optimal market according to the embodiment described with reference to FIGS. 3 and 4 may be implemented as a computer program (or a computer program product) including computer-executable instructions. The computer program includes programmable machine instructions that are processed by a processor, and may be implemented as a high-level programming language, an object-oriented programming language, an assembly language, a machine language, or the like. Furthermore, the computer program may be stored in a tangible computer-readable storage medium (for example, memory, a hard disk, a magnetic/optical medium, a solid-state drive (SSD), or the like).

Accordingly, the method for recommending an optimal market according to the embodiment described with reference to FIGS. 3 and 4 may be implemented in such a manner that the above-described computer program is executed by a computing apparatus. The computing apparatus may include at least some of a processor, memory, a storage device, a high-speed interface connected to memory and a high-speed expansion port, and a low-speed interface connected to a low-speed bus and a storage device. These individual components are connected using various buses, and may be mounted on a common motherboard or using another appropriate method.

In this case, the processor may process instructions within a computing apparatus. An example of the instructions is instructions which are stored in memory or a storage device in order to display graphic information for providing a Graphic User Interface (GUI) onto an external input/output device, such as a display connected to a high-speed interface. As another embodiment, a plurality of processors and/or a plurality of buses may be appropriately used along with a plurality of pieces of memory. Furthermore, the processor may be implemented as a chipset composed of chips including a plurality of independent analog and/or digital processors.

Furthermore, the memory stores information within the computing device. As an example, the memory may include a volatile memory unit or a set of the volatile memory units. As another example, the memory may include a non-volatile memory unit or a set of the non-volatile memory units. Furthermore, the memory may be another type of computer-readable medium, such as a magnetic or optical disk.

In addition, the storage device may provide a large storage space to the computing device. The storage device may be a computer-readable medium, or may be a configuration including such a computer-readable medium. For example, the storage device may also include devices within a storage area network (SAN) or other elements, and may be a floppy disk device, a hard disk device, an optical disk device, a tape device, flash memory, or a similar semiconductor memory device or array.

According to any one of the above-described solutions, there are proposed the apparatus and method for recommending an optimal market that recommend an optimal market for the supply of agricultural/marine products to a producer.

According to any one of the above-described solutions, there are proposed the apparatus and method for recommending an optimal market that recommend a market capable of selling agricultural/marine products, produced by a producer, at a desired price to the producer.

According to any one of the above-described solutions, there are proposed the apparatus and method for recommending an optimal market that support a producer in making a decision in order to maximize his or her profit by taking into consideration the transaction price of agricultural/marine products in each market, the trend of changes in the market price, transaction time, a decline in the product value, and the cost incurred to transport the agricultural/marine products to the corresponding market in an integrated manner.

The effects that can be obtained by the embodiments disclosed herein are not limited to the effects described above, and other effects not described above will be clearly understood by those having ordinary skill in the art, to which the present invention pertains, from the foregoing description.

The above-described embodiments are intended for illustrative purposes. It will be understood that those having ordinary knowledge in the art to which the present invention pertains can easily make modifications and variations without changing the technical spirit and essential features of the present invention. Therefore, the above-described embodiments are illustrative and are not limitative in all aspects. For example, each component described as being in a single form may be practiced in a distributed form. In the same manner, components described as being in a distributed form may be practiced in an integrated form.

The scope of protection pursued through the present specification should be defined by the attached claims, rather than the detailed description. All modifications and variations which can be derived from the meanings, scopes and equivalents of the claims should be construed as falling within the scope of the present invention.

## Claims

1. A method for recommending an optimal market, the method being performed by an apparatus for recommending an optimal market, the method comprising:
collecting and storing transaction information for each type of agricultural/marine products in a plurality of markets in which agricultural/marine products are traded;
receiving production information of agricultural/marine products of a user, including type, quantity, and production area location information of the agricultural/marine products, from the user;
searching for transaction information corresponding to the production information of the agricultural/marine products of the user, and selecting one or more markets to be recommended to the user based on the found transaction information; and
recommending the selected markets to the user by providing information about the selected markets to the user.

2. The method of claim 1, wherein the transaction information includes type information of agricultural/marine products traded, identification information of markets in which trade was performed, transaction price information, and transaction time information.

3. The method of claim 2, wherein selecting the markets comprises:
searching for transaction information of agricultural/marine products corresponding to the type information of agricultural/marine products of the user in association with the plurality of markets;
calculating transportation information including at least one of a transportation time, transportation distance and transportation cost for each identified market based on one or more markets identified by the market identification information included in the found transaction information and the location information of the production area included in the production information; and
selecting one or more markets to be recommended to the user based on the calculated transportation information and the price information included in the found transaction information.

4. The method of claim 2, wherein selecting the markets comprises:
searching for transaction information of agricultural/marine products corresponding to the type information of agricultural/marine products of the user in association with the plurality of markets;
calculating a transportation distance to each identified market based on one or more markets identified by the market identification information included in the found transaction information and the location information of the production area included in the production information;
selecting at least some of the identified markets as candidates based on the calculated transportation distances; and
finally selecting one or more markets to be recommended to the user from among the markets selected as the candidates in descending order of price information based on the price information included in the found transaction information.

5. The method of claim 1, further comprising, for at least one of the selected markets, providing predicted information including at least one of transportation information, including at least one of a transportation time, a transportation distance and a transportation cost, calculated based on each market and the location information of the production area included in the production information and transaction profit information expected to occur in each market.

6. An apparatus for recommending an optimal market, the apparatus comprising:
storage configured to store transaction information for each type of agricultural/marine products in a plurality of markets in which agricultural/marine products are traded;
an input/output interface configured to receive production information of agricultural/marine products of a user, including type, quantity, and production area location information of the agricultural/marine products, from a user, and to recommend one or more markets to the user by providing information about the markets to be recommended to the user; and
a controller configured to periodically collect the transaction information, to search for transaction information corresponding to the production information of the agricultural/marine products of the user, and to select one or more markets to be recommended to the user based on the found transaction information.

7. The apparatus of claim 6, wherein:
the transaction information includes type information of agricultural/marine products traded, identification information of markets in which trade was performed, transaction price information, and transaction time information; and
the controller is further configured to search for transaction information of agricultural/marine products corresponding to the type information of agricultural/marine products of the user in association with the plurality of markets, to calculate transportation information including at least one of a transportation time, a transportation distance and a transportation cost for each identified market based on one or more markets identified by the market identification information included in the found transaction information and the location information of the production area included in the production information, and to select one or more markets to be recommended to the user based on the calculated transportation information and the price information included in the found transaction information.

8. The apparatus of claim 7, wherein the controller is further configured to select at least some of the identified markets as candidates based on the calculated transportation information and to finally select one or more markets to be recommended to the user from among the markets selected as the candidates in descending order of price information based on the price information included in the found transaction information.

9. The apparatus of claim 6, wherein:
the controller is further configured to, for at least one market selected from among the selected markets, generate predicted information including at least one of transportation information, including at least one of a transportation time, a transportation distance and a transportation cost, calculated based on each market and the location information of the production area included in the production information and transaction profit information expected to occur in each market; and
the input/output interface is further configured to provide the generated, predicted information to the user.

10. A non-transitory computer-readable storage medium having stored thereon a program that, when executed by a processor, causes the processor to execute the method for recommending an optimal market set forth in claim 1.

11. A computer program that is executed by an apparatus for recommending an optimal market and stored in a non-transitory computer-readable storage medium in order to perform the method for recommending an optimal market set forth in claim 1.
